# EUROPÄISCHE PATENTSCHRIFT

(11) **EP 2 526 756 B1**
(45) Veröffentlichungstag und Bekanntmachung des Hinweises auf die Patenterteilung: **22.06.2016**
(21) Anmeldenummer: 12401082.8
(22) Anmeldetag: 08.05.2012
(51) Int. Cl.: A01C 23/00, A01M 7/00

(54) **Landwirtschaftliche Verteilmaschine mit Verteilergestänge**
Agricultural distribution machine with sprayboom
Machine de répartition agricole avec barre de distribution

(30) Priorität: 24.05.2011 DE 102011050579
(43) Veröffentlichungstag der Anmeldung: 28.11.2012
(73) Patentinhaber: Amazonen-Werke H. Dreyer GmbH & Co. KG, 49205 Hasbergen (DE)
(72) Erfinder: Austermann, Stefan, 48291 Telgte (DE); Oberheide, Friedrich, 49143 Bissendorf (DE); Resch, Rainer, 49170 Hagen a TW (DE)

(56) Entgegenhaltungen:
- EP-A1- 2 311 318
- DE-A1-102007 025 751
- DE-U1- 20 018 716

## Beschreibung

Die Erfindung betrifft eine landwirtschaftliche Verteilmaschine mit Verteilergestänge gemäß des Oberbegriffes des Patentanspruches 1.

Eine derartige landwirtschaftliche Verteilmaschine ist durch die DE 10 2007 025 751 A1 bekannt. Bei dieser Verteilmaschine soll das Verteilergestänge durch Kompensieren der Übertragung der Rahmenbewegung auf das Verteilergestänge durch geeignete Aktoren in einer möglichst ruhigen Lage gehalten werden, wobei Sensoren die Bewegung des Rahmens erfassen und an eine elektronische Regeleinrichtung übermitteln, die dann die Aktoren ansteuern. Die hier vorgesehene Ansteuerung der Aktoren ist jedoch relativ aufwändig.

Eine weitere landwirtschaftliche Verteilmaschine mit Verteilergestänge ist durch die DD 256 818 A5 bekannt. Um das Verteilergestänge in eine ruhige Lage zu bringen, sind hier zwischen dem Rahmen der Verteilmaschine und dem Verteilergestänge Bremsen und Rückholfeder angeordnet. Die Ausgestaltung der als Bremsen und Rückholfedern ausgestaltete Regeleinrichtung genügt in vielfacher Hinsicht nicht den heutigen Anforderungen.

Weiterhin ist durch das DE 200 18 716 U1 eine landwirtschaftliche Verteilmaschine mit einem Verteilergestänge bekannt. Zwischen dem Rahmen und dem Verteilergestänge sind einstell- oder steuerbare Dämpfungselemente angeordnet, mittels welchen eine wirkungsvolle Schwingungsdämpfung erreicht werden soll. Weiterhin soll eine Anpassung der Dämpfungseigenschaften an die jeweiligen Gestängeparameter ermöglicht werden. Dieses soll durch passive oder aktive angesteuerte Bauelemente erfolgen. Aufgrund welcher Parameter diese Bauelemente angesteuert werden sollen ist nicht beschrieben.

Der Erfindung liegt die Aufgabe zu Grunde, das Dämpfungsverhalten des Dämpfungselementes zwischen dem Rahmen der Verteilmaschine und dem Verteilergestänge entsprechend den tatsächlichen Einsatzbedingungen unmittelbar entsprechend anpassen zu können.

Diese Aufgabe wird erfindungsgemäß dadurch gelöst, dass das Dämpfungselement von der elektronischen Regeleinrichtung entsprechend der in der Speichereinrichtung der Regeleinrichtung hinterlegten Positionsdaten und der mit den Positionsdaten verknüpften Regelcharakteristik ansteuerbar und/oder einstellbar ist. Zusätzlich sind in der Speichereinrichtung der elektronischen Regeleinrichtung Daten über den Wendevorgang der Verteilmaschine am jeweiligen Feldende hinterlegt, so dass entsprechend dieser hinterlegten Daten das Dämpfungselement von der Regeleinrichtung ansteuerbar ist und zwar derart, dass eine möglichst ruhige Gestängelage auch beim Wendevorgang erreichbar ist.

Infolge dieser Maßnahme wird das Dämpfungselement positionsgenau entsprechend der für jede Position hinterlegten Regelcharakteristik entsprechend angesteuert und eingestellt. Hierdurch wird entsprechend den jeweiligen Gegebenheiten das Dämpfungselement über die elektronische Regeleinrichtung optimiert angesteuert und eingestellt. Somit ergibt sich eine vorteilhafte Lage des Verteilergestänges während der Ausbringarbeit zum Verteilen des Materials. Darüber hinaus ist es möglich, bereits im Vorfeld des Wendevorganges und beim Wendevorgang selbst auf die auf das Verteilergestänge einwirkenden Kräfte durch eine entsprechende Ansteuerung der Dämpfungselemente reagieren zu können. Dadurch wird ein optimiertes Schwingungsverhalten des Verteilergestänges auch beim Wendevorgang erreicht.

Über die Positionsdaten (in der Regel GPS-Signale) können Aussagen über die Topographie und Voraussagen über Arbeitsabläufe, wie z.B. das Vorgewende sowie Berg- und Talfahrt gemacht werden, umso über einen regelbaren Dämpfer der als aktiver Dämpfer ausgebildet ist, entsprechend auf die Gestängeführung einzuwirken. Somit wird eine optimierte und automatisiert angepasste Gestängeführung auf die jeweiligen Einsatzverhältnisse unter den jeweiligen Arbeitszustand in einfacher Weise möglich.

Um das Verteilergestänge durch die Ansteuerung des Dämpfungselementes immer in einer optimalen Lage während der Ausbringarbeit zu halten, ist vorgesehen, dass in der Speichereinrichtung der elektronischen Regeleinrichtung Daten über die Topographie der zu bearbeitenden Fläche hinterlegt sind, dass entsprechend dieser hinterlegten Daten das Dämpfungselement von der Regeleinrichtung ansteuer- und/oder regelbar ist.

Eine weitere Optimierung der Einstellung und Ansteuerung des Dämpfungselementes hinsichtlich eines optimalen Verhaltens des Verteilergestänges während der Ausbringarbeit wird dadurch erreicht, dass in der Speichereinrichtung der elektronischen Regeleinrichtung Daten über die Arbeitsabläufe für das Verteilen der mit der Verteilmaschine auszubringenden Materialien hinterlegt sind.

Weitere Einzelheiten der Erfindung sind der Beispielsbeschreibung und den Zeichnungen zu entnehmen. Hierbei zeigen
- Fig. 1: eine als gezogene Feldspritze mit Verteilergestänge ausgebildete landwirtschaftliche Verteilmaschine in schematischer und perspektivischer Darstellung,

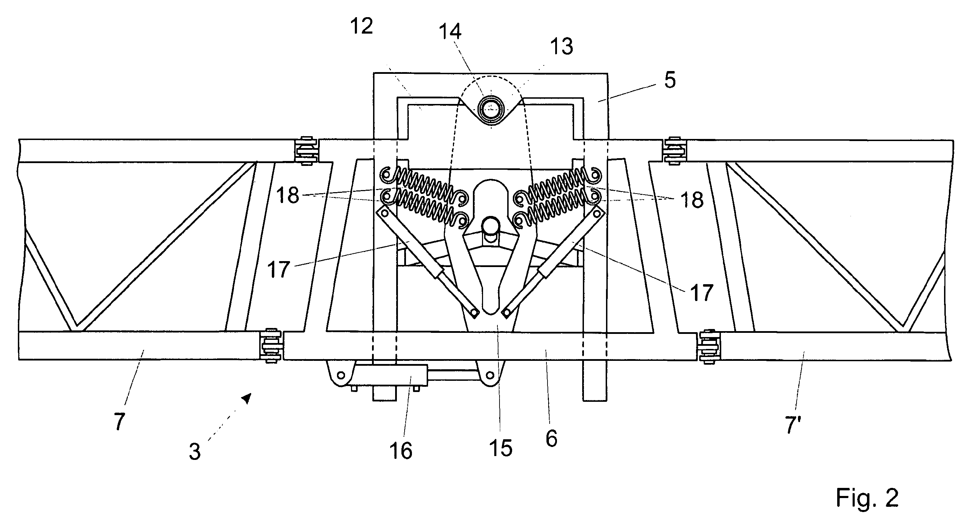

- Fig. 2: der mittlere Bereich des Verteilergestänges mit der Aufhängungsvorrichtung des Verteilergestänges am Rahmen der Verteilmaschine in der Ansicht von hinten, in schematischer Darstellung und Teilansicht,
- Fig. 3: einen zwischen dem Rahmen und dem Verteilergestänge angeordneten regelbaren Dämpfer im Schnitt und schematischer Darstellung,
- Fig. 4: einen anders ausgestalteten zwischen dem Rahmen und dem Verteilergestänge angeordneten regelbaren Dämpfer im Schnitt und schematischer Darstellung und
- Fig. 5: eine schematische Darstellung einer Feldkarte mit Höhenlinien, Fahrtroute und Erläuterungen zu den charakteristischen Situationen in vereinfachter Darstellung.

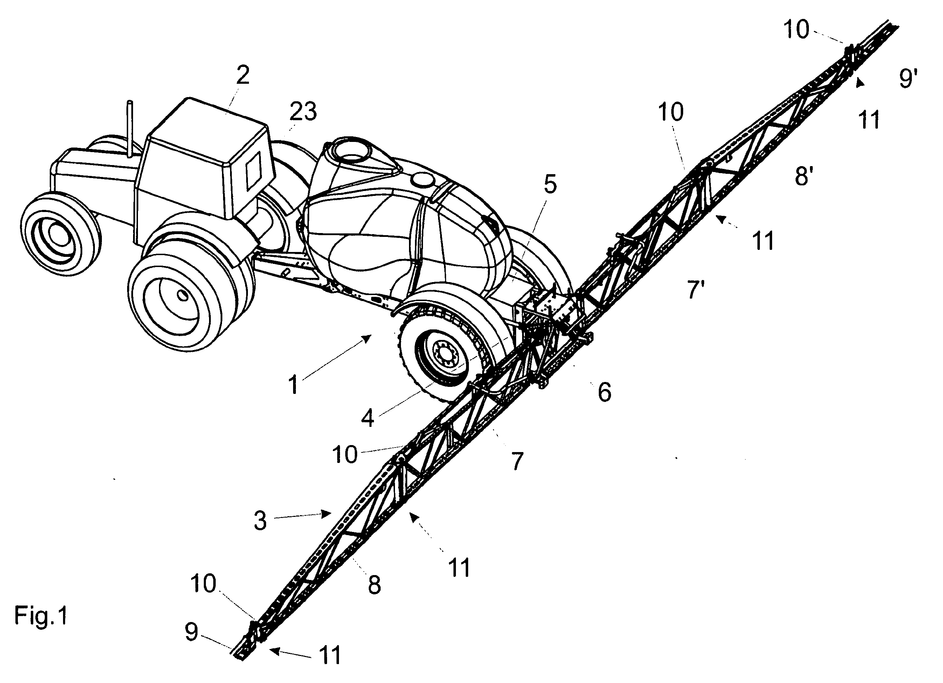

Das als gezogene landwirtschaftliche Feldspritze 1 ausgebildete landwirtschaftliche Gerät ist über eine Anhängevorrichtung an einen Ackerschlepper 2 angekoppelt. Die Feldspritze 1 weist auf ihrer Rückseite ein Verteilergestänge 3 auf, welches über eine Kuppeleinrichtung 4 an dem rückwärtigen Ende des Rahmens 5 der Feldspritze 1 in Höhenrichtung verstellbar angeordnet ist. Das Verteilergestänge 3 besteht aus einem mittleren Gestängeabschnitt 6 und mehreren gelenkig miteinander verbundenen Gestängeabschnitten 7, 7', 8, 8', 9, 9'. Der jeweilige innerste Gestängeabschnitt 7, 7' ist gelenkig an dem mittleren Gestängeabschnitt 6 angeordnet. Zwischen den einzelnen zueinander einklappbaren Gestängeabschnitten 7, 7', 8, 8', 9, 9' sowie zwischen dem jeweils innersten Gestängeabschnitt 7, 7' und dem mittleren Gestängeabschnitt 6 sind motorischen Stellelemente 10, die hier als doppeltwirkende Hydraulikzylinder ausgebildet sind, zum verbringen der Gestängeabschnitte 7, 7', 8, 8', 9, 9' in eine erste Klappstellung, die der Arbeitsstellung gemäß Fig. 1 entspricht und in eine zweite Klappstellung, in der die zueinander einklappbaren Gestängeabschnitte in zusammengeklappter Weise, die der nicht dargestellten Transportstellung entspricht, angeordnet. Die einzelnen aneinander anschließenden Gestängeabschnitte 7, 7', 8, 8', 9, 9' sind über Gelenke 11 miteinander verbunden.

Der mittlere Gestängeabschnitt 6 ist über die Gelenkhalterung 12 mittels eines Gelenkbolzens 13 an dem Rahmen 5 der Feldspritze 1 in schwenkbarer Weise um die in Fahrtrichtung verlaufende Schwenkachse 14 befestigt. Weiterhin ist an dem Gelenkbolzen 13 ein Zwischenelement 15 ebenfalls schwenkbar befestigt. Zwischen dem unteren Ende des Zwischenelementes 15 und dem mittleren Gestängeabschnitt 6 ist ein als doppeltwirkender Hydraulikzylinder 16 ausgebildetes Verstellelement befestigt. Mittels des Hydraulikzylinders 16 sind das Zwischenelement 15 und das Verteilergestänge 3 in fester Weise miteinander verbunden.

Zwischen dem Rahmen 5 und dem Zwischenelement 15, und somit dem Verteilergestänge 3 sind die Dämpfungselemente 17 und die als Zugfedern 18 ausgebildeten Federelemente angeordnet.

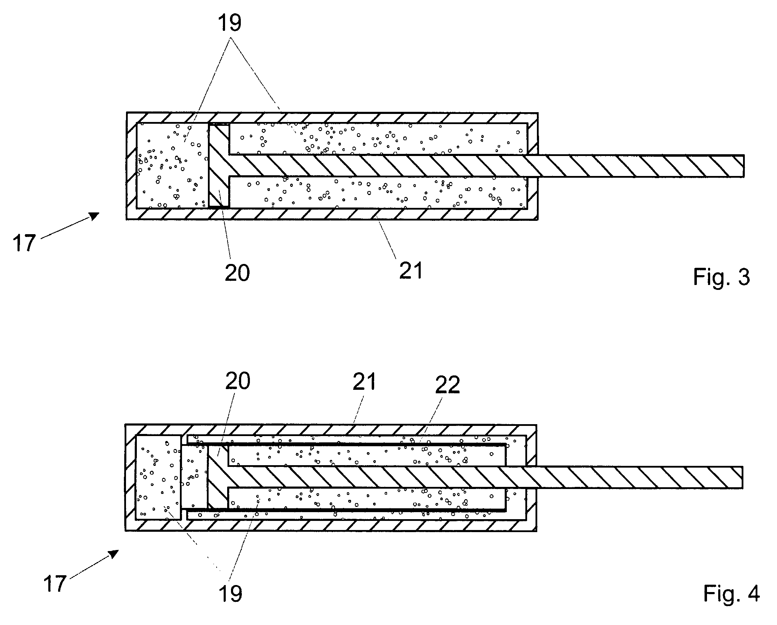

Die Dämpfungselemente 16 sind als aktive Dämpfungselemente, wie sie in den Fig. 3 und 4 vereinfacht dargestellt sind, ausgebildet. Sie basieren entweder auf dem elektrorheologischen oder magnetorheologischen Prinzip. Diese beiden Prinzipien werden im Folgenden kurz erläutert:
Das elektrorheologische Prinzip basiert auf der Veränderlichkeit der Viskosität einer elektrorheologischen Flüssigkeit 19 durch den Einfluss eines elektrischen Feldes. Die elektrorheologische Flüssigkeit enthält elektrisch polarisierbare Partikel, die durch die Wirkung eines elektrischen Feldes zwischen zwei Kondensatorplatten so ausgerichtet werden, dass die Viskosität des Fluids zunimmt. In einem elektrorheologischen Dämpfer werden entweder der Kolben 20 und das Gehäuse 21 oder ein Innenring 22 und das Gehäuse 21 als Elektroden verwendet. An diese wird eine Spannung angelegt sodass ein elektrisches Feld entsteht. Dieses beeinflusst die Viskosität der elektrorheologische Flüssigkeit 19 zwischen diesen Bauteilen im Millisekundenbereich und damit auch die Dämpfung.

Neben den elektrorheologischen Dämpfern existieren auch magnetorheologische Dämpfer als aktive Dämpfer 17. Grundlage für diese aktive Dämpfung ist das magnetorheologische Prinzip. Es basiert auf der Veränderlichkeit der Viskosität einer magnetorheologischen Flüssigkeit 19 durch den Einfluss eines magnetischen Feldes, welches durch das Anlegen eines Stroms an eine Spule erzeugt wird. In der magnetorheologische Flüssigkeit 19 sind magnetisch polarisierbare Partikel enthalten, die durch das Magnetfeld so ausgerichtet werden, dass sich die Viskosität der Flüssigkeit verändert.

In einem magnetorheologischen Dämpfer ist im Kolben 20 eine Spule integriert, die ein magnetisches Feld durch einen Strom erzeugt. Durch Durchlassbohrungen fließt die magnetorheologische Flüssigkeit 19 direkt durch das Magnetfeld, sodass die Viskosität lokal verändert und damit die Dämpfung im Millisekundenbereich beeinflusst werden kann.

Der Vorteil derartiger Dämpfer 17 besteht darin, dass die Viskosität der Dämpfungsflüssigkeit 19 in den Dämpfern 17 sehr schnell und einfach verändert werden kann, wodurch sich das Dämpfungsverhalten der Dämpfer 17 ebenfalls in sich veränderlicher Weise eingestellt werden kann, um sich so den Gegebenheiten entsprechend anpassen zu können.

Die Dämpfungsweise und Einstellung der Dämpfungscharakteristik sind im Folgenden weiter erläutert:
Die jeweiligen Dämpfer 17 sind von einer elektronischen Regeleinrichtung 23 über geeignete Datenübertragungseinrichtungen und/oder Datenleitungen entsprechend ansteuerbar, um das Regel- und/oder Dämpfungsverhalten der Dämpfer 17 in einfacher Weise ansteuern und/oder einstellen zu können. Hierbei sind in der Speichereinrichtung der Regeleinrichtung 23 Positionsdaten und mit den Positionsdaten verknüpfte Regelcharakteristiken für die Dämpfungselemente 17 hinterlegt. Aufgrund dieser in der Speichereinrichtung der Regeleinrichtung 23 hinterlegten Positionsdaten und der mit dem Positionsdaten verknüpften Regelcharakteristik sind die jeweiligen Dämpfungselemente 17 entsprechend ansteuerbar und/oder einstellbar.

Hierzu sind in der Speichereinrichtung der elektronischen Regeleinrichtung 23 Daten über die Topographie der zu bearbeitenden Fläche hinterlegt, so dass entsprechend dieser hinterlegten Daten das jeweilige Dämpfungselement 17 oder die jeweiligen Dämpfungselemente 17 von der Regeleinrichtung 23 ansteuer- und/oder regelbar ist. Weiterhin sind in der Speichereinrichtung der elektronischen Regeleinrichtung 23 Daten über die Arbeitsabläufe für das Verteilen der mit der Verteilmaschine 1 auszubringenden Materialien hinterlegt.

Weiterhin sind in der Speichereinrichtung der elektronischen Regeleinrichtung 23 Daten über den Wendevorgang der Verteilmaschine 1 am jeweiligen Feldende hinterlegt. Entsprechend dieser hinterlegten Daten ist das jeweilige Dämpfungselement 17 von der Regeleinrichtung 23 ansteuerbar und zwar derart, dass eine möglichst ruhige Gestängelage des Verteilergestänges 3 auch beim Wendevorgang erreichbar ist.

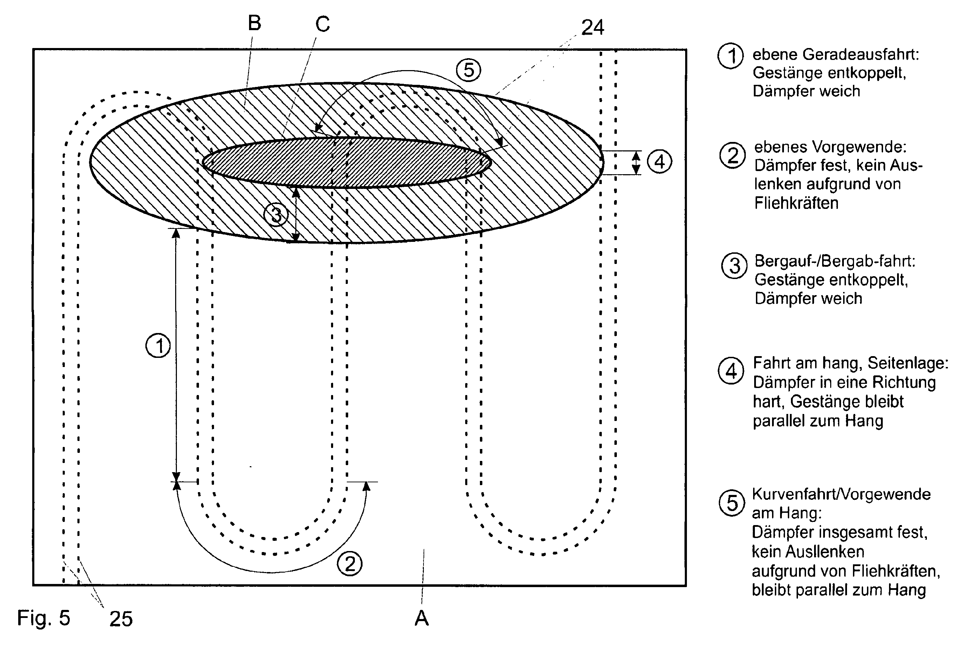

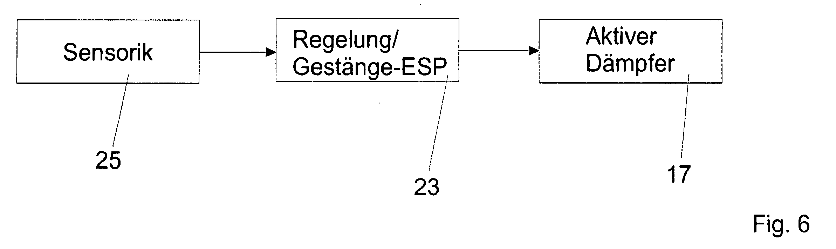

In der schematischen Feldkarte gemäß Fig. 5 sind verschiedene Höhenlinien 24 eingezeichnet, so dass sich die verschiedenen Höhenbereiche und Geländeverläufe A, B und C ergeben. Weiterhin sind der Verlauf der Fahrspuren 25, die die Fahrgassen darstellen, wie das Feld abgearbeitet wird, eingezeichnet. Anhand einiger charakteristischer Streckenabschnitte ①, ②, ③, ④, ⑤ wird das grundsätzliche Regelverhalten bzw. die Regelcharakteristik der Einstellung der Dämpfer 17 in grundsätzlicher Weise erläutert:
Bei dem Abschnitt ① handelt es sich um eine Geradeausfahrt auf einer ebenen Fläche im Bereich A. Über einen derartigen Abschnitt ① ist das Gestänge 3 entkoppelt und der Dämpfer 17 ist mit einer weichen Regelcharakteristik eingestellt.
Bei dem Abschnitt ② handelt es sich um ein Vorgewende auf einer ebenen Fläche in Bereich A. In einem derartigen Abschnitt ② ist der Dämpfer 17 mit einer festen Regelcharakteristik eingestellt, so dass kein Auslenken des Verteilergestänges 3 aufgrund von Fliehkräften erfolgen kann. Bei dem Abschnitt ③ handelt es sich je nach Fahrtrichtung um eine Bergauf- oder Bergabfahrt im Bereich B. Hier ist wiederum das Gestänge 3 entkoppelt und der Dämpfer 17 ist mit einer weichen Regelcharakteristik eingestellt. Dies ist mit dem Abschnitt 1 zu vergleichen.
Bei dem Abschnitt ④ handelt es sich um eine Fahrt quer zum Hang im Übergang der Bereiche A und B, so dass die Maschine sich in Seitenlage befindet. Hier wird der Dämpfer 17 durch die Regeleinrichtung 23 mit einer harten Regelcharakteristik eingestellt, so dass das Gestänge 3 parallel zum Hang sich einstellt und entsprechend verbleibt.
Bei dem Abschnitt ⑤ handelt es sich um eine Kurvenfahrt im Vorgewende am Hang im Übergang der Bereiche B und C. Der Dämpfer 17 wird durch die Regeleinrichtung 23 insgesamt mit einer festen Regelcharakteristik eingestellt, so dass kein Auslenken des Verteilergestänges 3 aufgrund von Fliehkräften erfolgt. Somit bleibt das Verteilergestänge 3 parallel zum Hang bzw. zu dessen Neigung.

## Patentansprüche

1. Landwirtschaftliche Verteilmaschine (1) mit Verteilergestänge (3) und einem sich auf einem Fahrwerk auf dem Boden abstützenden Rahmen (5), wobei das Verteilergestänge (3) mittels einer Aufhängungsvorrichtung zumindest um eine in Fahrtrichtung verlaufende Schwenkachse (14) bewegbar am Rahmen (5) aufgehängt ist, wobei das Verteilergestänge (3) eine Erstreckung quer zur Fahrtrichtung aufweist, die ein Vielfaches der Transportbreite der Verteilmaschine (1) ist, wobei die Aufhängungsvorrichtung zumindest ein zwischen dem Verteilergestänge (3) und dem Rahmen (5) angeordnetes Dämpfungselement (17) aufweist, welches von einer elektronischen Regeleinrichtung ansteuerbar ist, **dadurch gekennzeichnet, dass** das Dämpfungselement (17) von der elektronischen Regeleinrichtung (23) entsprechend der in der Speichereinrichtung der Regeleinrichtung (23) hinterlegten Positionsdaten und der mit den Positionsdaten verknüpften Regelcharakteristik ansteuerbar und/oder einstellbar ist, wobei in der Speichereinrichtung der elektronischen Regeleinrichtung (23) Daten über den Wendevorgang der Verteilmaschine (1) am jeweiligen Feldende hinterlegt sind, dass entsprechend dieser hinterlegten Daten das Dämpfungselement (17) von der Regeleinrichtung (23) ansteuerbar ist und zwar derart, dass eine möglichst ruhige Gestängelage des Verteilergestänges (3) auch beim Wendevorgang erreichbar ist.

2. Landwirtschaftliche Verteilmaschine (1) nach Anspruch 1, **dadurch gekennzeichnet, dass** in der Speichereinrichtung der elektronischen Regeleinrichtung (23) Daten über die Topographie der zu bearbeitenden Fläche hinterlegt sind, dass entsprechend dieser hinterlegten Daten das Dämpfungselement (17) von der Regeleinrichtung (23) ansteuer- und/oder regelbar ist.

3. Landwirtschaftliche Verteilmaschine (1) nach einem oder mehreren der vorstehenden Ansprüche, **dadurch gekennzeichnet, dass** in der Speichereinrichtung der elektronischen Regeleinrichtung (23) Daten über die Arbeitsabläufe für das Verteilen der mit der Verteilmaschine (1) auszubringenden Materialien hinterlegt sind.

## Claims

1. Agricultural distribution machine (1) with a distribution boom (3) and a frame (5) supported on the ground on moving gear, wherein the distribution boom (3) is suspended on the frame (5) by means of a suspension device so as to be movable at least about a pivot axis (14) running in the direction of travel, wherein the distribution boom (3) has an extent transverse with respect to the direction of travel, the extent being a multiple of the transport width of the distribution machine (1), wherein the suspension device has at least one damping element (17) which is arranged between the distribution boom (3) and the frame (5) and is activatable by an electronic regulating device, **characterized in that** the damping element (17) is activatable and/or adjustable by the electronic regulating device (23) in accordance with the position data stored in the memory device of the regulating device (23) and the regulating characteristics linked to the position data, wherein data regarding the turning operation of the distribution machine (1) at the respective field end are stored in the memory device of the electronic regulating device (23), **in that** the damping element (17) is activatable by the regulating device (23) in accordance with said stored data, specifically in such a manner that as steady a boom position of the distribution boom (3) as possible even during the turning operation can be achieved.

2. Agricultural distribution machine (1) according to Claim 1, **characterized in that** data regarding the topography of the area to be cultivated are stored in the memory device of the electronic regulating device (23), **in that** the damping element (17) is activatable and/or regulable by the regulating device (23) in accordance with said stored data.

3. Agricultural distribution machine (1) according to either of the preceding claims, **characterized in that** data regarding the working sequences for the distribution of the materials to be discharged by the distribution machine (1) are stored in the memory device of the electronic regulating device (23).

## Revendications

1. Épandeur agricole (1) comprenant une tringlerie de distribution (3) et un cadre (5) s'appuyant sur un châssis sur le sol, la tringlerie de distribution (3) étant accrochée au moyen d'un dispositif d'accrochage de manière à pouvoir être déplacée sur le cadre (5) au moins autour d'un axe de pivotement (14) s'étendant dans la direction de conduite, la tringlerie de distribution (3) présentant une étendue transversalement à la direction d'avance, qui est un multiple de la largeur de transport de l'épandeur (1), le dispositif d'accrochage présentant au moins un élément d'amortissement (17) disposé entre la tringlerie de distribution (3) et le cadre (5), lequel peut être commandé par un dispositif de réglage électronique, **caractérisé en ce que** l'élément d'amortissement (17) peut être commandé et/ou ajusté par le dispositif de réglage électronique (23) en fonction des données de position consignées dans le dispositif de mémoire du dispositif de réglage (23) et de la caractéristique de réglage associée aux données de position, des données concernant l'opération de retour de l'épandeur (1) à l'extrémité respective du champ, étant consignées dans le dispositif de mémoire du dispositif de réglage électronique (23), **en ce qu'**en fonction de ces données consignées, l'élément d'amortissement (17) peut être commandé par le dispositif de réglage (23) et ce de telle sorte qu'une position aussi silencieuse que possible de la tringlerie de distribution (3) puisse être obtenue même lors de l'opération de retour.

2. Épandeur agricole (1) selon la revendication 1, **caractérisé en ce que** dans le dispositif de mémoire du dispositif de réglage électronique (23) sont consignées des données concernant la topographie de la surface à traiter, **en ce qu'**en fonction de ces données consignées, l'élément d'amortissement (17) peut être commandé et/ou réglé par le dispositif de réglage (23).

3. Épandeur agricole (1) selon l'une quelconque ou plusieurs des revendications précédentes, **caractérisé en ce que** dans le dispositif de mémoire du dispositif de réglage électronique (23) sont consignées des données concernant les déroulements des opérations pour l'épandage des substances à appliquer avec l'épandeur (1).
